Europäisches Patentamt

European Patent Office

Office européen des brevets

(19)

(11) Veröffentlichungsnummer : **0 086 329**
**B1**

(12) **EUROPÄISCHE PATENTSCHRIFT**

(45) Veröffentlichungstag der Patentschrift :
06.05.87

(21) Anmeldenummer : 83100201.9

(22) Anmeldetag : 12.01.83

(51) Int. Cl.⁴ : **E 04 F 13/08**, E 04 B   1/60

(54) **Verbindungsvorrichtung.**

(30) Priorität : 30.01.82 DE 3203194

(43) Veröffentlichungstag der Anmeldung :
24.08.83 Patentblatt 83/34

(45) Bekanntmachung des Hinweises auf die Patenterteilung : 06.05.87 Patentblatt 87/19

(84) Benannte Vertragsstaaten :
AT BE CH DE FR GB IT LI LU NL SE

(56) Entgegenhaltungen :
AT-B-   334 038
DE-A- 2 211 375
DE-A- 2 610 998
DE-A- 2 738 748
DE-U- 1 984 279

(73) Patentinhaber : Fricker, Siegfried
Wurmberger Strasse 30-34
D-7135 Wiernsheim (DE)

(72) Erfinder : Fricker, Siegfried
Wurmberger Strasse 30-34
D-7135 Wiernsheim (DE)

(74) Vertreter : Frank, Gerhard, Dipl.-Phys. et al
Patentanwälte Dr. F. Mayer & G. Frank Westliche 24
D-7530 Pforzheim (DE)

## Beschreibung

Die Erfindung betrifft eine Haltevorrichtung für abstandsmäßig feststellbare Bauwerksbekleidungen, mit einem an der Tragwand befestigbaren Tragschenkel und einem davon rechtwinklig abstehenden, mit dem Tragschenkel über ein Aufnahmeteil verbundenen Tragarm, wobei der Tragarm Profilierungen aufweist, die zusammen mit einem Feststellelement den Abstand des Tragarms zur Tragwand fixieren, sowie Aufnahmeeinrichtungen am Tragarm für die Bauwerksbekleidung.

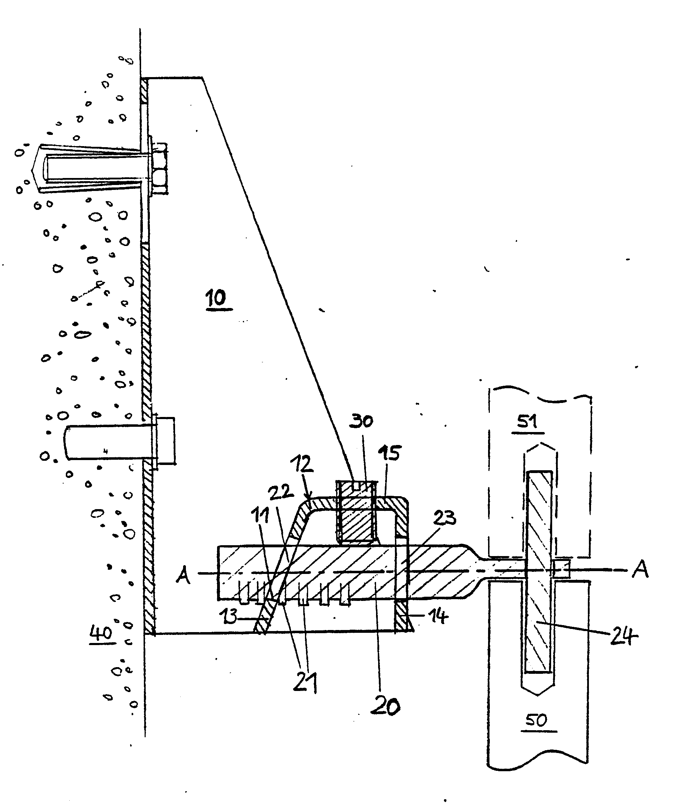

Eine derartige Haltevorrichtung ist aus der DE-A-2 211 375 bekannt, insbesondere aus den dortigen Figuren 1 und 2.

Hierbei besteht das Aufnahmeteil für den Tragarm aus rechtwinklig gegenüber dem Tragschenkel abgekröpften Schenkelteile, die eine im wesentlichen waagrecht verlaufende Ebene bilden, auf die der Tragarm mit innenseitigen Profilierungen aufgeschoben und in beliebigem Abstand von der Tragwand auf dem Aufnahmeteil mittels eines Feststellelementes verklemmt und somit fixierbar ist. An seinem äußeren, von der Tragwand abgewandten Ende weist der Tragarm Aufnahmeeinrichtungen für die Bauwerksbekleidung auf.

Bei dieser vorbekannten Haltevorrichtung ist zwar der Abstand dieser Aufnahmevorrichtungen von der Tragwand durch Verschiebung des Tragarms auf dem Aufnahmeteil einstellbar, jedoch hängt die einwandfreie Montage der Verkleidungselemente in den Aufnahmeteilen von einer entsprechend genauen Ausrichtung des Tragschenkels auf der Tragwand ab, die lediglich durch Aufdrehen und wieder Festschrauben des ein Schlitzloch der Tragwand durchsetzenden Bolzens beeinflußt werden kann, der nach der Montage der Bauwerksbekleidung jedoch nicht mehr ohne weiteres zugänglich ist, zumal dessen Lockerung auch sicherungstechnisch problematisch wäre, da er die einzige Halterung des Aufnahmeteils an der Tragwand darstellt. Darüberhinaus würde eine Verdrehung der Aufnahmeeinrichtungen des Tragarms gegenüber dem Bolzen auch automatisch zu einer horizontalen und vertikalen Lageänderung der Aufnahmeeinrichtungen führen, so daß dann wiederum nicht die gewünschte Position der Aufnahmeeinrichtungen im Verhältnis zu der Bauwerksbekleidung erreicht würde.

Die Aufgabe der Erfindung besteht daher darin, die gattungsgemäße Haltevorrichtung derart weiterzubilden, daß der Tragschenkel gegenüber dem Tragarm verdreht werden kann, so daß der Tragschenkel in einer beliebigen Position auf der Tragwand befestigt werden kann.

Diese Aufgabe wird erfindungsgemäß dadurch gelöst, daß der Tragarm ein Bolzen ist, der in dem Aufnahmeteil drehbar gehalten ist und mit Querrippen als Profilierungen in dieses eingreift, und daß an diesem Aufnahmeteil das Feststellelement angebracht ist, das auch die Drehposition des Bolzens und damit die Winkelbeziehung zwischen dem Tragschenkel und der Projektion der Aufnahmeeinrichtungen auf die Tragwand festlegt.

Damit ist es möglich, bei fest vorgegebenem, d. h. in der Tragwand verankertem Tragschenkel noch nachträglich, d. h. nach dem Einhängen der Bauwerksbekleidung, eine winkelmäßige Orientierung der Bauwerksbekleidung relativ zur Tragwand vorzunehmen ; nach winkelmäßiger Ausrichtung des Bauwerksbekleidungsteils (beispielsweise einer Vorhängefassade) kann dann diese Position genauso wie der Abstand der Verkleidungsplatte von der Tragwand durch Zugriff auf das leicht erreichbare Feststellelement fixiert werden.

Diese erfindungsgemäße Möglichkeit beruht im wesentlichen auf der Drehbarkeit des als Bolzen ausgebildeten Tragarms in seiner Längsachse.

Vorteilhafte Ausgestaltungen der Haltevorrichtung sind den Unteransprüchen zu entnehmen.

Ein Ausführungsbeispiel der Erfindung wird anhand der Zeichnung näher erläutert.

Beim dargestellten Ausführungsbeispiel ist der Tragschenkel 10 aus einem trapezförmigen Flachteilzuschnitt gebildet, dessen nicht parallel zueinander verlaufende Seitenteile abgebogen sind, so daß ein Tragschenkel mit U-förmigem Querschnitt entsteht. Das Mittelteil des Tragschenkels 10 wird an der Tragwand 40 befestigt, die abgebogenen Flachteile zeigen von der Tragwand weg und dienen zur Aufnahme des Tragarmes 20.

Zur Aufnahme des Tragarms 20 weist der Tragschenkel 10 zwischen den beiden parallel verlaufenden Seitenflügeln einen U-Bügel 12 auf, der mit zwei Bohrungen 22, 23 versehen ist. Durch diese Bohrungen greift der Tragarm 20 und wird von einer Schraube als Feststellelement 30 gehalten, die durch eine Bohrung im Mittelteil 15 des U-Bügels 12 geführt ist.

Der Tragarm 20 ist als Bolzen ausgeführt, an dessen Unterseite Profilierungen 21 ausgebildet sind, die mit der Unterkante der Bohrung 22 wahlweise in Eingriff gebracht werden können und so zur Längsverstellbarkeit des Tragarms führen. Durch die Ausbildung des Tragarms als Bolzen wird eine Drehbarkeit des Tragschenkels gegenüber dem Tragarm erreicht, so daß der Tragschenkel in einer beliebigen Position auf der Tragwand befestigt werden kann.

Am nach außen zeigenden Ende des Tragarms 20 weist dieser in bekannter Weise eine Bohrung auf, durch die ein Stift 24 in die angrenzenden Vorsatzschalen 50 und 51 eingelassen ist.

Durch die Drehbarkeit des Bolzens in seiner Längsachse A-A kann die Position des Stiftes 24 auf die Bohrungen in den Vorsatzschalen 50 und 51 abgestimmt werden. Diese Möglichkeit der optimalen Einstellung des Stiftes 24 kann noch verbessert werden, wenn die Bohrung für den Stift 24 am äußeren Ende des Tragarms 20 als parallel zur Tragwand 40 verlaufendes Langloch ausgebildet ist, so daß Toleranzen nicht nur hinsichtlich der Neigung der Bohrungen der Vorsatzschalen 50 und 51 ausgeglichen werden können, sondern auch vorhandene oder durch thermische Beanspruchung entstehende Parallelverschiebungen der Vorsatzschalen 50 und 51 relativ zur Tragwand 40.

Abgesehen von der konstruktiven Realisierung beim dargestellten Ausführungsbeispiel ist lediglich wesentlich, daß der Tragschenkel 10 in horizontaler Richtung eine Profilierung 11 aufweist (hier gebildet durch die Unterkante der Bohrung 22) und daß am Tragarm 20 damit in Eingriff zu bringende Profilierungen (im Ausführungsbeispiel die Profilierungen 21) vorgesehen sind.

Anstelle des U-Bügels 12 und der darin geführten Schraube als Feststellelement 30 ist es auch ohne weiteres möglich, eine Schelle über den Tragarm 20 zu legen, um das Aufeinanderpressen der korrespondierenden Profilierungen 11, 21 zu gewährleisten. Anstelle der Unterkante der Bohrung 22 als Profilierung 11 kann dann eine gezahnte Tragplatte dienen.

In jedem Falle ist durch eine derartige Konstruktion gewährleistet, daß nach Einstecken des Stiftes 24 in die untere Vorsatzschale 50 genügend Raum bleibt, um von oben das Feststellelement 30 zu lockern und wieder festzuziehen, um den passenden Eingriff der korrespondierenden Profilierungen auszuwählen.

**Patentansprüche**

1. Haltevorrichtung für abstandsmäßig feststellbare Bauwerksbekleidungen, mit einem an der Tragwand (40) befestigbaren Tragschenkel (10) und einem davon rechtwinklig abstehenden, mit dem Tragschenkel (10) über ein Aufnahmeteil (12) verbundenen Tragarm (20), wobei der Tragarm (20) Profilierungen (21) aufweist, die zusammen mit einem Feststellelement (30) den Abstand des Tragarms (20) zur Tragwand (40) fixieren, sowie Aufnahmeeinrichtungen (24) am Tragarm (20) für die Bauwerksbekleidung (50, 51), dadurch gekennzeichnet, daß der Tragarm (20) ein Bolzen ist, der in dem Aufnahmeteil (12) drehbar gehalten ist und mit Querrippen als Profilierungen (21) in dieses eingreift, und daß an diesem Aufnahmeteil (12) das Feststellelement (30) angebracht ist, das auch die Drehposition des Bolzens (20) und damit die Winkelbeziehung zwischen dem Tragschenkel (10) und der Projektion der Aufnahmeeinrichtungen (24) auf die Tragwand (40) festlegt.

2. Haltevorrichtung nach Anspruch 1, dadurch gekennzeichnet, daß das Aufnahmeteil (12) von einem U-Bügel gebildet ist, dessen Schenkel (13, 14) eine Bohrung (22, 23) aufweisen, durch die der Bolzen (20) geführt ist.

3. Haltevorrichtung nach Anspruch 2, dadurch gekennzeichnet, daß zumindest ein Schenkel (13) des U-Bügels (12) aus der Vertikalen geneigt ist, so daß die untere Kante von dessen Bohrung (22) als Profilierung (11) wirkt.

4. Haltevorrichtung nach Anspruch 1, dadurch gekennzeichnet, daß die Aufnahmeeinrichtungen (24) von einem Stift gebildet sind, der ein am äußeren Ende des Tragarms (20) parallel zur Tragwand (40) verlaufendes Langloch durchgreift.

**Claims**

1. Retaining device for structural covers which are securable at intervals, including a supporting shank (10), which is mountable on the supporting wall (40), and a supporting arm (20), which protrudes therefrom at right angles and is connected to the supporting shank (10) via a receiver member (12), the supporting arm (20) having profiled portions (21) which, together with a securing means (30), fix the spacing between the supporting arm (20) and the supporting wall (40), and receiver means (24) on the supporting arm (20) for the structural cover (50, 51), characterised in that the supporting arm (20) is a bolt which is rotatably retained in the receiver member (12) and engages in said receiver member with transverse ribs serving as profiled portions (21), and in that the securing means (30) is mounted on this receiver member (12) and also determines the rotary position of the bolt (20) and hence the angular relationship between the supporting shank (10) and the projection of the receiver means (24) onto the supporting wall (40).

2. Retaining device according to claim 1, characterised in that the receiver member (12) is formed from a U-shaped clamp whose shanks (13, 14) have a bore (22, 23) through which the bolt (20) extends.

3. Retaining device according to claim 2, characterised in that at least one shank (13) of the U-shaped clamp (12) slopes from the vertical, so that the lower edge of its bore (22) acts as a profiled portion (11).

4. Retaining device according to claim 1, characterised in that the receiver means (24) are formed by a pin which passes through a slot extending parallel to the supporting wall (40) at the outer end of the supporting arm (20).

**Revendications**

1. Dispositif de fixation pour revêtements d'ouvrage à bloquer à une certaine distance, doté d'un support (10) qui peut être fixé sur la paroi porteuse (40) et d'un bras-support (20) dépassant à la perpendiculaire de ce dernier, auquel il est relié par l'intermédiaire d'un élément récepteur (12), le bras-support (20) présentant des profils (21) qui définissent, avec un élément de blocage (30), son écartement par rapport à la paroi porteuse (40), ainsi que de dispositifs de réception (24), prévus sur le bras-support (20) pour le revêtement d'ouvrage (50, 51), caractérisé en ce que le bras-support (20) est un axe, fixé avec une possibilité de rotation dans l'élément récepteur (12), dans lequel il s'encastre au moyen de profils (21), représentés par des nervures transversales,

et en ce que l'élément récepteur (12) reçoit l'élément de blocage (30), qui définit également la position de rotation de l'axe (20), donc la position relative entre le support (10) et la projection des dispositifs de réception (24) sur la paroi porteuse (40).

2. Dispositif de fixation suivant la revendication 1, caractérisé en ce que l'élément récepteur (12) est un étrier en U, dont les branches (13, 14) présentent une ouverture de passage (22, 23) pour l'axe (20).

3. Dispositif de fixation suivant la revendication 2, caractérisé en ce qu'une branche (13) au moins de l'étrier en U (12) est inclinée par rapport à la verticale, de telle sorte que le bord inférieur de son ouverture (22) fait office de profil (11).

4. Dispositif de fixation suivant la revendication 1, caractérisé en ce que les dispositifs de réception (24) sont constitués par une goupille, qui pénètre dans un trou longitudinal parallèle à la paroi porteuse (40), à l'extrémité externe du bras-support (20).